(19) Europäisches Patentamt
European Patent Office
Office européen des brevets

(11) Publication number: 0 539 912 A2

## (12) EUROPEAN PATENT APPLICATION

(21) Application number: 92118314.1

(22) Date of filing: 27.10.92

(51) Int. Cl.5: **G01N 27/333**, G01N 27/28

(30) Priority: **31.10.91 JP 286181/91**

(43) Date of publication of application:
**05.05.93 Bulletin 93/18**

(84) Designated Contracting States:
**CH DE FR GB IT LI**

(71) Applicant: **KYOTO DAIICHI KAGAKU CO., LTD.**
**57 Nishiaketa-cho Higashikujo Minami-ku Kyoto-shi Kyoto-fu(JP)**

(72) Inventor: **Taguchi, Takayuki, KYOTO DAIICHI KAGAKU CO., LTD.**
**57, Nishiaketa-cho, Higashikujo, Minami-ku Kyoto-shi, Kyoto-fu(JP)**
Inventor: **Yamaguchi, Tadao, KYOTO DAIICHI KAGAKU CO., LTD.**
**57, Nishiaketa-cho, Higashikujo, Minami-ku Kyoto-shi, Kyoto-fu(JP)**
Inventor: **Taniguchi, Hiroshi, KYOTO DAIICHI KAGAKU CO., LTD.**
**57, Nishiaketa-cho, Higashikujo, Minami-ku Kyoto-shi, Kyoto-fu(JP)**

(74) Representative: **von Kreisler, Alek et al**
**Patentanwälte von Kreisler Selting Werner Deichmannhaus am Hauptbahnhof W-5000 Köln 1 (DE)**

(54) **Method for producing dry-operative ion-selective electrode.**

(57) A dry-operative ion-selective electrode having improved surface smoothness of ion-selective membrane is prepared by forming a metal layer for electrodes on a support plate, masking terminal parts of said metal layer with an electrically conductive paste, printing a resist layer so as to define reference electrode parts, chemically treating parts of said metal layer corresponding to said reference electrode parts to form metal salt layers, forming an ion-selective membrane on said reference electrode parts defined by said resist layer, heating the substrate carrying the ion-selective membrane and cooling it.

The present invention relates to a method for producing a dry-operative ion-selective electrode which has a high uniformity of an ion-selective membrane surface.

Ion-selective electrodes are used for measuring a concentration of a specific ion contained in a liquid sample such as a body fluid (e.g. blood, urine, saliva, etc.) or water in environment. Among the ion-selective electrodes, recently, dry-operative ones are widely used since they can be used easily and have good accuracy.

In general, the dry-operative ion-selective electrode comprises a reference electrode, an electrolyte layer contacting to the reference electrode and an ion-selective membrane. One of the typical dry-operative ion-selective electrodes is disclosed in Japanese Patent Publication No. 4981/1983 and U.S. Patent Nos. 4,053,381 and 4,214,968. The disclosed dry-operative ion-selective electrode is prepared by depositing a metal layer on a plastic film, applying an electrolyte layer and an ion-selective membrane on the metal layer, drying them and cutting the film carrying the metal layer, the electrolyte layer and the ion-selective membrane to a suitable size to give a pair of ion-selective electrodes. In the case of such ion-selective electrode, when a sample liquid supplied on the electrode for analysis flows over an edge of the ion-selective membrane, it may form a short circuit between the layers on the cut surface. To measure plural ion concentrations simultaneously, plural pairs of the electrodes are arranged in parallel. To spread the supplied liquid sample over all of the reference electrodes, a porous material for spreading the sample should be used, or the number of steps for producing the electrode increases. In addition, since the electrolyte layer and the ion-selective membrane are formed by coating methods, only a part of the produced laminate film has a uniform thickness and can be used for the production of the ion-selective electrodes. Therefore, such method is very wasteful.

Japanese Patent Kokai Publication No. 287146/1990 and EP-A-0 394 990 disclose a dry-operative ion-selective electrode which does not suffer from the drawbacks of the above described prior arts and has an electrolyte layer and an ion-selective membrane with good uniformity and a method for effectively producing such electrode.

In the prior art methods including this newly proposed method, the ion-selective membrane is, in general, formed by dissolving an ion-selective material, a plasticizer, a film-forming material such as a polymer in an organic solvent (e.g. tetrahydrofuran, cyclohexanone, methyl ethyl ketone, etc.), coating or dropping a resulting solution on the electrolyte layer and air-drying it.

However, in the air-drying, atmospheric conditions such as a temperature, a humidity and an air stream have delicate influences on the formation of the ion-selective membrane. In particular, evaporation of the solvent generates minute unevenness in varying manners on the membrane surface. Since the generated unevenness influences a response speed or a voltage stability of the electrode, properties of the electrode vary widely. To reduce the difference among the electrodes, highly controlled atmospheric conditions are required. To this end, a very expensive equipment is necessary.

One object of the present invention is to provide a method for producing a dry-operative ion-selective electrode with a very simple equipment.

Another object of the present invention is to provide a method for producing a dry-operative ion-selective electrode which has decreased individual varieties.

These and other objects of the present invention are achieved by a method for producing a dry-operative ion-selective electrode comprising steps of:

forming a metal layer for electrodes on a support plate,

masking terminal parts of said metal layer with an electrically conductive paste,

printing a resist layer so as to define reference electrode parts,

chemically treating parts of said metal layer corresponding to said reference electrode parts to form metal salt layers,

forming an ion-selective membrane on said reference electrode parts defined by said resist layer, heating the substrate carrying the ion-selective membrane, and

cooling it.

Fig. 1 is a cross sectional view of a dry-operative ion-selective electrode to be produced by the method of the present invention, and

Figs. 2A to 2D is an exploded perspective view of a dry-operative ion-selective electrode to be produced by the method of the present invention.

In the present invention, a film or a sheet of an insulating material such as a plastic film is used as the support plate. As plastics, polyesters, polypropylene, acrylic resins, polyvinyl chloride and the like are preferred.

The metal layer is formed from electrically conductive metals such as silver, copper and aluminum. Among them, silver is preferred. The electrode metal layer can be formed by any of conventional method such as screen printing of a metal paste or metal deposition.

The terminal parts of the metal layer are masked with an electrically conductive paste. Then, a resist layer is printed on the support plate with leaving the reference electrode parts and the terminal parts uncoated. The resist layer act as a "wall" for restricting the electrolyte layer and the ion-selective membrane when they are formed on the reference electrode in the subsequent steps.

The wall of the resist layer is formed with a distance of at least 0.2 mm from the peripheral edge of the reference electrode to leave a space between the reference electrode and the wall. Such space is advantageous for forming the uniform ion-selective membrane. The reason for this will be explained later. When an electrically insulating part is provided at a portion where the resist layer and the reference electrode meet each other before the formation of the resist layer, it gives the same effect as the space formed between the reference electrode and the wall.

As insulating materials for the electrically non-conductive part, although commercially available insulating ink may be used, an electrically non-conductive metal paste is preferred in view of adhesivity and etching resistance. The electrically non-conductive metal paste is a metal paste having a small content of the metal.

As the resist material, commercially available insulating ink can be used. Examples of such ink are UV curable type ones such as ML 25089, ML 25094 and ED 450 SS (manufactured by Nippon Atison), STR 5320 (manufactured by Shinto Chemitron), DS-4 and INS-3 (manufactured by Jujo Kako) and FOC-35 (manufactured by Taiyo Ink Manufacturing), and thermosetting type ones such as STR-5110 (manufactured by Shinto Chemitron), HIPET 9300 (manufactured by Jujo Kako) and CR 420 G and CR 48 G (manufactured by Osaka Asahi Chemical). The present invention is not limited to these examples.

The resist layer may be formed by applying the insulating ink by screen printing and curing the resin by UV radiation in case of the UV curable type ink. The printing of the ink and curing are repeated till the resist layer having a desired thickness, for example, 30 to 300 $\mu$m, preferably 50 to 250 $\mu$m is obtained. In case of the thermosetting ink, the printed ink is heated to a temperature of 100 to 150°C instead of UV radiation.

The electrode parts defined by the resist layer are chemically treated to form a metal salt layer on the metal layers. The metal salt is usually a halide, preferably a chloride, although other salts may be formed.

Then, with utilizing the areas surrounded by the resist layer, the electrolyte layer and the ion-selective membrane are formed on each reference electrode. As disclosed in Japanese Patent Kokai Publication No. 106852/1982, the electrolyte layer may be neglected.

When an electrolytic solution is poured in the areas, a liquid film with a substantially uniform thickness is formed by surface tension. Therefore, when the liquid film is evaporated and dried without disturbing it, the electrolyte layer having a uniform thickness is formed at least over the reference electrode.

When a liquid is poured in a container, the liquid generally creeps up slightly along an inner wall of the container. When the liquid is evaporated in such form, the inner portion is uniformly dried while the edge part is dried in such state that the liquid is dragged up by the portion contacting to the inner wall.

When the wall is provided apart from the area on which the uniform film should be formed and the poured liquid is evaporated and dried, the uniform film is formed in the center area covering the reference electrode although the peripheral area is dragged up along the wall. In the present invention, the electrolyte layer and the ion-selective membrane are uniformly formed in such manner.

The distance between the edge of the reference electrode and the wall is at least 0.2 mm, preferably at least 0.3 mm. When the distance is too larger, a volume of a wasted part increase. Then, the distance is preferably from 0.2 to 1.0 mm, more preferably from 0.3 to 0.5 mm.

The electrolyte may be a conventional one and preferably contains the same anion as that of the metal salt, although it contains an anion different from that of the metal salt. In some cases, the electrolyte may be neglected, and a polymer layer is formed between the reference electrode and the ion-selective membrane.

On the electrolyte layer, a solution of a material for the ion-selective membrane is poured and dried to form the ion-selective membrane having a uniform thickness.

According to the present invention, the support plate carrying the above formed components is subjected to a thermal treatment at a temperature at which the formed ion-selective membrane is softened so that its surface is smoothened. The heating temperature varies with the material of the membrane. Usually, the temperature is from 40 to 160°C.

The material for the ion-selective membrane may be any of the conventional materials, for example, hydrophobic materials for the ion-selective membrane disclosed in Japanese Patent Kokai Publication No. 4981/1983 and U.S. Patent Nos. 4,053,381 and 4,214,968.

Now, the present invention will be illustrated by making reference to the accompanying drawings.

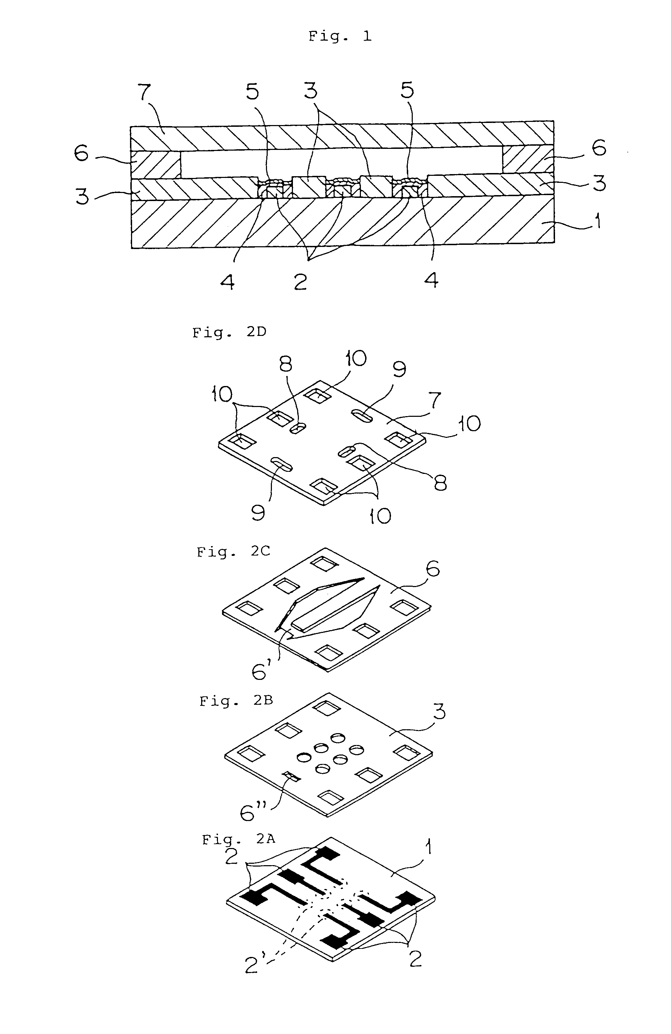

Fig. 1 shows a cross section of the dry-operative ion-selective electrode of the present invention.

The electrode of Fig. 1 comprises a support plate 1 made of a plastic film, electrode layers 2 formed on the support plate 1, a resist layer 3 which is formed on the support plate 1 with surrounding reference electrode parts of the electrode layers 2, electrolyte layers 4 and ion-selective membranes 5 which are laminated on the reference electrodes in the areas defined by the resist layer 3, a covering plate 7, and a second resist layer 6 which is interposed between the resist layer 3 and the covering plate 7 to form a space between them.

The method for producing the dry-operative ion-selective electrode of Fig. 1 will be explained by making reference to Fig. 2.

As shown in Fig. 2A, on the plastic film support plate 1, an electrically conductive metal, preferably a silver paste is applied by a conventional method such as printing to form the electrode layers 2. The areas circled by dotted lines, which areas form the reference electrodes, may be chemically treated to convert the metal in the surface layers to the metal salt such as silver halide at this stage. Preferably, the metal in the circled areas are chemically treated after the resist layer 3 is formed.

Before the resist layer 3 is formed, the electrically non-conductive material is provided to a part where the conductive metal layer and the resist layer meet each other, whereby the ion-selective membrane having the uniform thickness is advantageously formed.

On the support plate having the electrode layers 2, the resist layer 3 as shown in Fig. 2B is formed and then the second resist layer 6 as shown in Fig. 2C is formed on the resist layer 3. At a part in the area 6' defined by the second resist layer 6 which part corresponds to a window 6'' of the resist layer 3, a bridge (not shown) is provided.

At this stage, a quantity of an electrolytic solution is poured in the spaces on the reference electrode parts 2' surrounded by the resist layer 3 and then dried to form the electrolyte layers 4. On the formed electrode layers 4, a quantity of the solution of material for the ion-selective membrane is poured and dried to form the ion-selective membranes 5. Each of three pairs of the ion-selective membranes contain an ion carrier for one of three kinds of ions to be detected.

The support plate carrying the ion-selective membrane is then heated and cooled to smoothen the surface of the ion-selective membrane.

Finally, the cover plate 7 as shown in Fig. 2D is placed over the laminate to complete the dry-operative ion-selective electrode. The cover plate 7 has holes 8 for supplying the liquid to be analyzed, holes 9 for venting the air and holes 10 for exposing the electrode terminals.

When dents are formed on the inside surface of the cover plate 7 at parts corresponding to the windows of the second resist layer 6, the second resist layer 6 can be neglected.

When the liquid sample is analyzed with the dry-operative ion-selective electrode of the present invention, it is poured from one of the holes 8, while a reference liquid containing the ions at predetermined concentrations is poured from the other one of the holes 8. The poured liquid sample and the reference liquid spread in the space surrounded by the cover 7 and the resist layers 3 and 6 by capillarity, reach the reference electrodes 2 and are absorbed by the bridge to form a liquid junction.

Thereby, a cell is formed between each pair of the electrodes, and the electromotive force is measured. The ion concentration is determined from the electromotive force by means of a calibration line. When the electromotive force is measured with a voltmeter having the calibration line, the ion concentration can be directly read from the voltmeter.

The present invention will be explained further in detail by following examples, which do not limit the scope of the present invention.

Example 1 and Comparative Example

Production of Ion-Selective Electrode

An electrode was produced by the following steps.

1. On a polyester film, a thermosetting type silver paste (VO-200 manufactured by Nippon Atison) was printed through a printing plate of 200 mesh and 20 $\mu$m in thickness and heated at 150°C for 30 minutes to cure the paste to form silver layers. Each electrode part in the printed pattern had a width of 2.5 mm.

2. At terminal parts of the electrodes, a thermosetting carbon ink was printed through a printing plate of 200 mesh and 10 $\mu$m in thickness and heated at 150°C for 30 minutes to cure the carbon ink.

3. At parts where the resist layer and the electrodes met each other, a UV curable resist composition (ML-25089 manufactured by Nippon Atison) was printed through a printing plate of 300 mesh and 10

$\mu$m in thickness and irradiated with UV at an output of 6 kw to cure the resist composition.

4. The same UV curable resist composition was printed through a printing plate of 300 mesh and 40 $\mu$m in thickness. Such procedures were repeated three times to form a resist layer of about 50 $\mu$m in thickness. Each hole formed in the resist layer had a diameter of 3.2 mm.

5. By the same procedures as in the step 4 but changing the printing pattern, the second resist was formed.

6. The support plate carrying the electrodes and the resist layers was washed by immersing it in 3N nitric acid for one minute.

7. Then, the support plate was immersed in a chromic acid solution (1 % by weight of dichromic acid, 0.15 N hydrochloric acid and 0.2 N potassium chloride) for 3 minutes to form a silver chloride layer.

8. In each of the holes, 0.7 $\mu$l of a respective solution of a material for ion-selective membrane having the following composition was dropped, dried, heated at 60°C and cooled to form an ion-selective membrane.

In Comparative Example, the heating step was neglected.

Composition of the solution

a. Solution for sodium ion-selective membrane

| | |
|---|---|
| Polyvinyl chloride | 2 g |
| Bis-(12-crown-4)[1] | 1 g |
| NPOE[2] | 4 g |
| TFPB[3] | 0.1 g |
| Tetrahydrofuran | 15 g |

b. Solution for potassium ion-selective membrane

| | |
|---|---|
| Polyvinyl chloride | 2 g |
| Bis-(benzo-15-crown-5)[4] | 0.5 g |
| NPOE[2] | 2 g |
| K-TCPB[5] | 0.02 g |
| Tetrahydrofuran | 8 g |

Note: 1) Bis[(12-crown-4)methyl]methyldodecyl malonate.

2) o-Nitrophenyl octyl ether.

3) Sodium tetrakis[3.5-bis(trifluoromethyl)-phenyl] borate.

4) Bis[(benzo-15-crown-5)-4'-methyl] pimelate.

5) Potassium tetrakis(p-chlorophenyl) borate.

9. An aqueous solution of polyvinyl alcohol having a concentration of 10 g/dl was printed through a printing plate of 200 mesh and 50 $\mu$m in thickness and dried.

10. A polyester film was adhered and cut to a piece of 25 mm x 35 mm to obtain an electrode.

The number of electrodes to be produced in one time depends on a size of a screen printing machine.

Example 2

With the electrode produced in Example 1 or Comparative Example, sodium and potassium ions in serum was analyzed.

6

Analysis

Through one of the holes for supplying the liquid, 20 μl of a standard solution containing sodium ions in a concentration of 150 meq/l and potassium ions in a concentration of 4 meq/l was poured. Simultaneously, through the other one of the holes for supplying the liquid, 20 μl of serum for control was poured. After 2 minutes, generated voltages were measured. The results are shown in Table 1 (Example 1) and Table 2 (Comparative Example).

Table 1 [Example 1 with the heating step]

| No. | Na | K | No. | Na | K | No. | Na | K |
|---|---|---|---|---|---|---|---|---|
| 1 | 125.6 | 3.3 | 1 | 138.3 | 3.97 | 1 | 151.6 | 4.56 |
| 2 | 127.6 | 3.38 | 2 | 139.9 | 4.09 | 2 | 149.3 | 4.45 |
| 3 | 126.7 | 3.32 | 3 | 137.9 | 4.1 | 3 | 148.5 | 4.39 |
| 4 | 126.5 | 3.51 | 4 | 138.6 | 4.11 | 4 | 147.1 | 4.54 |
| 5 | 123.2 | 3.37 | 5 | 138.1 | 4.14 | 5 | 146.5 | 4.53 |
| 6 | 127.4 | 3.32 | 6 | 140.7 | 4.23 | 6 | 149.1 | 4.52 |
| 7 | 125.6 | 3.34 | 7 | 138.5 | 4.03 | 7 | 148.8 | 4.63 |
| 8 | 129.9 | 3.28 | 8 | 139.8 | 4.05 | 8 | 145.3 | 4.53 |
| 9 | 129.9 | 3.4 | 9 | 140 | 4.15 | 9 | 149.5 | 4.6 |
| 10 | 128 | 3.28 | 10 | 139.3 | 4.12 | 10 | 147.5 | 4.56 |
| Av. | 127.0 | 3.35 | Av. | 139.1 | 4.099 | Av. | 148.3 | 4.531 |
| SD | 1.924 | 0.066 | SD | 0.907 | 0.067 | SD | 1.707 | 0.065 |
| CV | 1.514 | 1.971 | CV | 0.652 | 1.652 | CV | 1.150 | 1.445 |

CV = (SD (Standard Deviation)/Average) x 100

Table 2

| No. | Na | K | No. | Na | K | No. | Na | K |
|---|---|---|---|---|---|---|---|---|
| 1 | 130.4 | 3.379 | 1 | 134.3 | 3.95 | 1 | 139.9 | 4.601 |
| 2 | 125.8 | 3.328 | 2 | 136.8 | 3.794 | 2 | 154.8 | 4.488 |
| 3 | 114.7 | 3.164 | 3 | 133.7 | 4.073 | 3 | 155.7 | 4.83 |
| 4 | 123.0 | 3.170 | 4 | 139.7 | 4.313 | 4 | 154.6 | 4.470 |
| 5 | 127.4 | 3.426 | 5 | 145.5 | 4.139 | 5 | 150.9 | 4.457 |
| 6 | 124.3 | 3.252 | 6 | 140.5 | 4.088 | 6 | 149.7 | 4.644 |
| 7 | 130.1 | 3.519 | 7 | 136.9 | 3.924 | 7 | 144.6 | 4.383 |
| 8 | 112.6 | 3.159 | 8 | 133.3 | 3.930 | 8 | 147.1 | 4.425 |
| 9 | 124.5 | 3.100 | 9 | 143.5 | 4.186 | 9 | 144.0 | 4.27 |
| 10 | 119.9 | 3.22 | 10 | 144.9 | 4.012 | 10 | 150.0 | 4.447 |
| Av. | 123.3 | 3.272 | Av. | 138.9 | 4.041 | Av. | 149.1 | 4.501 |
| SD | 5.625 | 0.129 | SD | 4.367 | 0.143 | SD | 4.936 | 0.147 |
| CV | 4.619 | 3.944 | CV | 3.143 | 3.541 | CV | 3.308 | 3.276 |

7

Above Examples do not limit the scope of the present invention, and various modifications and changes can be made in the technical scope of the present invention.

For example, the number of the electrode pairs may be one or more. Not only sodium, potassium and chloride ions but also lithium, calcium and carbonate ions can be measured by suitably selecting the ion carriers.

**Claims**

1. A method for producing a dry−operative ion−selective electrode comprising steps of:

   forming a metal layer for electrodes on a support plate,

   masking terminal parts of said metal layer with an electrically conductive paste,

   printing a resist layer so as to define reference electrode parts,

   chemically treating parts of said metal layer corresponding to said reference electrode parts to form metal salt layers,

   forming an ion−selective membrane on said reference electrode parts defined by said resist layer, and

   heating the substrate carrying the ion−selective membrane, and

   cooling it.

2. The method according to claim 1, wherein said metal layer electrodes are formed by screen printing.

3. The method according to claim 1, which further comprises forming a second resist layer on said resist layer which defines the reference electrodes, halogenating metal at said reference electrodes, and placing a covering plate on said second resist layer.

4. The method according to claim 1, which further comprises forming an electrically non−conductive part at an area where said reference electrode and said resist layer meet each other before forming said resist layer.

Fig. 1

Fig. 2D

Fig. 2C

Fig. 2B

Fig. 2A